# EUROPEAN PATENT APPLICATION

(11) **EP 1 914 577 A1**
(43) Date of publication of application: **23.04.2008**
(21) Application number: 06255332.6
(22) Date of filing: 17.10.2006
(51) Int. Cl.: G02B 6/44

(54) **Optical fibre installation apparatus**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A blowing head for installing an optical fibre unit into a tube, including driving means for driving the optical fibre unit into the tube, the driving means having a plurality of driving surfaces, wherein one or more of the plurality of the driving surfaces are resiliently biased with a predetermined force toward the other driving surface or surfaces, and wherein in use the optical fibre unit moves between the plurality of driving surfaces.

## Description

This invention relates to methods and apparatus for the installation of telecommunications cables, in particular optical fibre installed into pre-installed optical fibre tubes by "blowing" techniques.

The method and apparatus used to install optical fibre transmission lines into optical fibre tubes or ducts using the viscous drag provided a high-speed flow of a fluid medium, often air, is known from EP108590 and other publications. A blowing head is used for the installation of the optical fibre unit into the optical fibre tubes or ducts. (In this description, references to "fibre" and "fibre units" shall be deemed to include individual fibre members, fibre bundles and fibre cables, and vice versa, as the context allows.)

In general, the blowing head comprises a chamber, into which pressurised air is pumped. The air is directed to flow into the mouth of a fibre tube, and then through the tube which is connected to the blowing head. The fibre unit is fed into the tube by a pushing force, typically between a pair of motorised drive rollers or wheels. (A drive wheel typically consists of a disc having a thickness, with a rim being the surface defined by the thickness of the disc. In this description, the term "rim" may refer to all or part of this surface as the context permits.) When a sufficient length of fibre unit has been pushed into the tube, the pressurised air works on the fibre surface allowing the effects of viscous drag take over at least part of the task of advancing the fibre within the tube.

In use, the blowing heads of the prior art suffer from a number of problems. One such problem is that the fibre unit may buckle during installation. As discussed in EP253636, optical fibre is flexible and necessarily smaller in cross section than the fibre tube it is populating. In use, part of the advancing fibre unit could stop moving within the tube due to excessive friction build up between the fibre and the interior of the tube. A fibre buckle develops if the blowing head continues to drive the fibre unit regardless. A buckled fibre unit could adversely affect the performance of the fibre when installed, or even physically damage it. At the least, buckling would slow down the installation process.

In one solution, proposed by the applicants in an earlier application no. WO 2006103419, apparatus arranged to be sensitive to fibre buckles is described, wherein a low-inertia system is capable of detecting an impending buckle, before it occurs. The drive wheels are arranged to be responsive to detection of the impending fibre unit buckle by slowing or stopping so that the pushing force reduces or stops, thus considerably reducing the occurrence of buckles. The responsiveness of the blowing head system is derived from carefully arranging the distance between the drive wheels so that the fibre unit is engaged relatively lightly with, and between, the drive wheels. As optical fibre units and fibre cables are typically very small in diameter (e.g. about 1 mm for a fibre unit), the wheel rim distance is configured so that they only lightly touch each other, or else do not actually touch but are just shy of doing so. By further providing that the current output by the motor driving wheels is capped, the blowing head is set up to sense an impending buckle in the fibre unit manifest as a slowing down or stopping in the progress of the fibre unit through the drive wheels.

Due to the smallness of the diameter of the fibre unit, there is very little tolerance in the system when handling the fibre unit; thus the components of the blowing head must be very precisely calibrated and aligned. This is particularly so, to ensure that the system is as sensitive as possible to respond to changes in the movement of the fibre unit within the blowing head. It has however been found that it is difficult to obtain a drive wheel arrangement wherein the distance or space between the rims of the respective drive wheels is optimal i.e. sufficient to engage with the exterior of the fibre unit so that it can be pushed along in use without slipping, but without losing any of the sensitivity permitting the drive wheels to detect an impending buckle.

The optimal wheel rim distance is difficult to ascertain in the first place, and difficult to calibrate given the small dimensions involved. The wheel rim distance is also likely to change over time with use, requiring frequent and precise re-alignment. The resulting arrangement thus obtained is then optimal or suitable for use with only one, or a very limited range of fibre unit diameter sizes.

The applicants have now devised a blowing head which addresses the above problems, to provide a solution to overcome the above issues related to the need for precise configuration in a blowing head in a low-inertia blowing head environment wherein impending buckles are reduced or avoided by adoption of a motor with capped current output.

According to a first aspect of the invention there is provided a blowing head for installing an optical fibre unit into a tube, including driving means for driving the optical fibre unit into the tube, the driving means having a plurality of driving surfaces, wherein one or more of the plurality of the driving surfaces are resiliently biased with a predetermined force toward the other driving surface or surfaces, and wherein in use the optical fibre unit moves between the plurality of driving surfaces.

The blowing head according to the invention addresses various problems. These include the need to correctly and precisely calculate then calibrate the space or distance between the drive wheels optimally provide sufficient grip to prevent fibre damage through slipping, while yet remaining light and sensitive to changes in fibre movement indicative of impending fibre buckle; the likelihood of change in the set distance between the drive wheels through use; lack of robustness of optical fibre installation apparatus for use in outdoor conditions; and lack of flexibility of use in current blowing heads with fibre units or fibre cables of various external diameter sizes.

The applicants in this case have realised that instead of considering the distance or space required to accommodate the external diameter of the fibre unit for which the blowing head is intended to be used, the above issues and problems could be addressed by considering instead the amount of pressure or force the drive wheels bear or compress onto each other while the fibre unit is driven between them.

With the arrangement of driving means including biased drive surfaces, there is no longer the need to calculate the optimal distance to put between the two drive wheels as was needed in the prior art - which was previously understood to be so that the drive wheels would just touch, or just not touch, each other. There is also no need to set this distance during manufacture, nor the need to re-set the same after use of the blowing head, both problematic tasks given the smallness of the dimensions involved.

Yet another advantage of the invention is that the invention will flexibly accommodate irregular or eccentric drive wheel circumferences or rim surfaces. In use, any irregularity of the circumferences of the respective wheels may during wheel rotation cause the distance between the wheel rims to vary as they rotate, so that the gap or distance between the drive wheels varies over time. The process installation of the fibre unit may then be adversely affected so that the fibre unit slips between the drive wheels at some times (where the space between the wheels is excessive), and other times the sensitivity of the blowing head is impaired (where the drive wheels engage each other too tightly).

The blowing head of the invention can also be used with a wider range of fibre units or cables than could the blowing head of the prior art, with its fixed and rigid set drive wheel distance. Currently in the UK, fibre cables can include a range of numbers of fibre unit, from two to 12 fibres. It is possible that this range may in the future increase to 18 or 19 fibres. The blowing head of the invention will be more able to accommodate a larger range of fibre external diameters.

It is possible for driving means of the invention to consist of a number of drive surfaces, although in preferred embodiments the driving means consists of two drive wheels, which surface of drive wheel rims engage with the fibre unit to drive it through the blowing head. The biasing means is preferably spring-loaded, and can be arranged so that one or both of the drive wheels resiliently urge the respective drive surfaces together. In an embodiment of the invention, one or both drive wheels are powered by an electric motor, which is capable of an electric current which is capped

In further preferred embodiments, changes in the movement of the fibre unit through the drive wheels can be sensed in the low-inertia system and fed back, so that an impending fibre buckle can be anticipated and hopefully avoided through the capped electric current system.

In a second aspect of the invention there is provided an installation including a blowing head for installing an optical fibre unit into a tube, including driving means for driving the optical fibre unit into the tube via the blowing head, the driving means having a plurality of driving surfaces, wherein one or more of the plurality of the driving surfaces are resiliently biased with a predetermined force toward the other driving surface or surfaces, and wherein in use the optical fibre unit moves between the plurality of driving surfaces.

An installation according to the invention may include the blowing head of the invention and means for supplying electrical power and compressed air, as well as the optical fibre tubes which the optical fibre units or cables are to populate.

In a third aspect of the invention there is provided a method of installing an optical fibre unit into a tube, including the steps of
- inserting the optical fibre unit into the blowing head,
- driving the optical fibre unit through the blowing head between a plurality of driving surfaces, wherein one or more of the plurality of the driving surfaces are arranged to resiliently bias with a predetermined force toward the other driving surface or surfaces, and
- driving the optical fibre unit out of the blowing head and into a tube connected to the blowing head using the driving means.

To install the fibre unit, a user in one method initially manually pushes it into the blowing head until it is "caught" by the drive wheels. The fibre unit is then propelled forwards between the drive wheels, one or both of which are biased, so that any change in the external diameter of the fibre unit travelling between the drive wheels can be resiliently accommodated.

In a further aspect of the invention there is provided an optical fibre unit installed into a tube whenever obtained by carrying out a method including the steps of
- inserting the optical fibre unit into the blowing head,
- driving the optical fibre unit through the blowing head between a plurality of driving surfaces, wherein one or more of the plurality of the driving surfaces are arranged to resiliently bias with a predetermined force toward the other driving surface or surfaces, and
- driving the optical fibre unit out of the blowing head and into a tube connected to the blowing head using the driving means.

The invention will now be described, by way of example only, with reference to the following drawings in which:
Figure 1 A is a block diagram of the parts of a typical blowing head according to the prior art,
Figure 1 B depicts a blowing head according to the prior art,
Figures 2A and 2B depicts two views of a blowing head of the invention; and
Figure 3 is a further view of the interior of the blowing head of the invention.

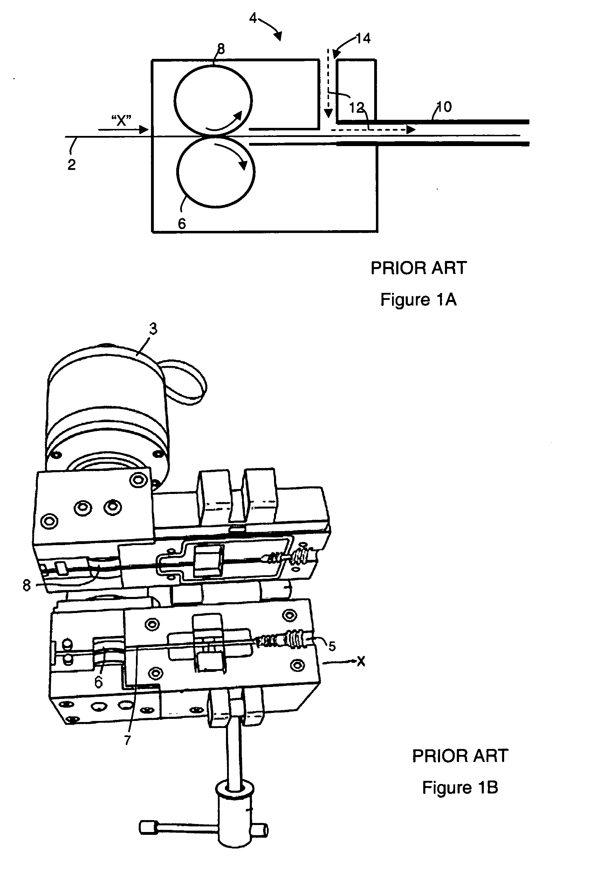

Figure 1A is a schematic view of the main operational parts of a typical blowing head known in the art. A supply of fibre unit (2) is taken from a pan (not shown), and fed in the direction indicated by the arrow "X" into a blowing head (4) at a first, entry, end, and travels along a path described by a bore which extends the length of the blowing head. In use, the fibre unit passes through a pair of motorised drive wheels (6, 8) along the blowing head to the opposite, exit, end of the blowing head, to which the fibre tube (10) which the fibre unit is to populate, is coupled. The fibre unit travels along the bore from the entry to exit ends of the blowing head by being driven by the drive wheels, which are powered by a motor (not shown). Within the tube, the progress of the fibre unit through the fibre tube is further assisted by a supply of pressurised air (12) which is fed into the blowing head via an air supply vent, where most of the air enters and flows along in the interior of the fibre tube so as to carry the fibre unit along by viscous drag obtain the advance of the fibre unit through the tube to the far end.

Figure 1 B shows a particular embodiment of a blowing head which was developed and used by the applicants, and described in greater detail in e.g. the patent specification of WO 98/12588. The blowing head is here shown in an open position comprising the upper and lower parts of the device which are pivotally hinged together. During an installation session, the two parts are brought together and secured with a clamp. A throughbore (7) extends the length of the blowing head, defining the path taken by the fibre unit during an installation session. The fibre unit is fed and driven in the direction of the arrow "X", and passes between the pair of drive wheels (6, 8) which in use engage tightly together with no distance between them. The fibre unit passes through the. head along the throughbore and eventually emerges at the other end of the throughbore and into the waiting tube which is secured to the head at the portion of the throughbore (5). Within the blowing head, the drive wheels serve to drive the fibre unit along, and the wheels themselves are powered by a motor (3). In this blowing head, the motor directly powers the upper drive wheel (8). The lower drive wheel (6) is not directly connected to the motor and is driven only when the two parts of the head are assembled so that the two wheels engage in such as manner so that the movement of the upper drive wheel causes the lower wheel to rotate.

In yet another embodiment of a blowing head described in the applicant's application under WO 2006103419 (which shall in the present discussion be referred to as the "low-inertia blowing head"), the drive wheels (6, 8) are preferably made from lightweight material such as a plastic compound. Again, they are coupled to the driving power source e.g. an electrical motor, so that in use the wheels rotate about their respective axes imparting onto the fibre unit travelling between the drive wheel rims, the driving force which carries the fibre through the blowing head and into the fibre tube. Unlike the blowing head discussed against Figure 1 B however, each drive wheel is arranged so that each one is independently capable of rotation, without engaging the other drive wheel. Here, the drive heads are connected via a light gearing located remote to the wheel rims which engage the fibre unit during use. The distance between the drive wheel rims is carefully set so that they either just touch, or else are just shy of touching each other, so that in use the fibre unit can be light accommodated in the space between the wheel rims.

This arrangement reduces the inertia levels of the drive wheels in use to a minimal level. In the present discussion, "low inertia" refers to the capacity of components of the system to quickly respond or react to changes - in particular the change in speed or movement of the optical fibre travelling between the drive wheels during use, by e.g. slowing or stopping the rotational movement of the drive wheels.

In use, the drive wheels engage with the exterior surface of the fibre unit relatively lightly, as opposed to the higher compressive force wherein the wheels "crunch" on each other and on the fibre. In the low-inertia system therefore, if the fibre unit being driven by and through the drive wheels slows down in movement or stops - which occurs when the fibre unit buckles - this causes the lightly-mounted drive wheels to also slow down or stop their rotary movement.

Another aspect of the blowing head described in WO 2006103419, is that the electrical current output by the motor is capped. This means that if and when the drive wheels slow down or stop, the current level output by the motor cannot rise above a pre-determined limit. Where the fibre unit movement slows or stops, this is an indication of either an impending or a realised buckle outside the blowing head e.g. somewhere in the tube which is being populated. The limit of the current is set at a level so that the fibre unit slows in its movement (indicating an imminent buckle), the drive wheels also slow down to compensate; if the fibre unit movement slows of stops, the motor current approaches or reaches its ceiling level, and the drive wheels either slow down or stop rotating completely.

It is thus crucial that the distance between the drive wheel rims in particular is very precisely provided for, and positioned to ensure that the system is sufficiently low-inertia, to allow for any slowing down or stopping in the fibre unit movement to be quickly detected and fed back so that the motor current can respond accordingly. However, delicately-configured instruments are impractical in the field, where they need to be sufficiently robust to withstand a measure of manhandling, physical shock, and contamination.

In the prior art blowing heads discussed herein, there is little or no flexibility associated with the drive wheel distance setting. Thus if installation of a fibre unit outside the small range (if indeed a range is possible) of fibre unit sizes for which the wheels are set is desired, the user will need to change the drive wheel settings. These could include changing the tyres on drive wheels, to modify the distance between the wheels, or to replace the wheels completely e.g. from a plain or flat profile to a grooved profile to accommodate an increase in fibre diameter.

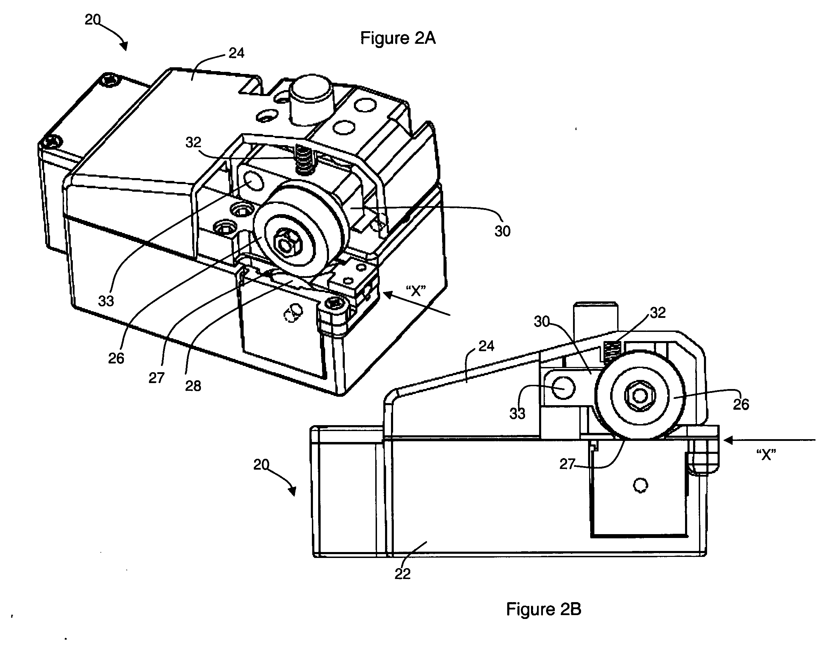

Figures 2A and 2B depict views of a blowing head (20) according to the invention. Figure 2A shows an exterior perspective view with a portion of the housing cut away for a view of the interior, in particular the drive wheels. Figure 2B is a side view of the blowing head of Figure 2A.

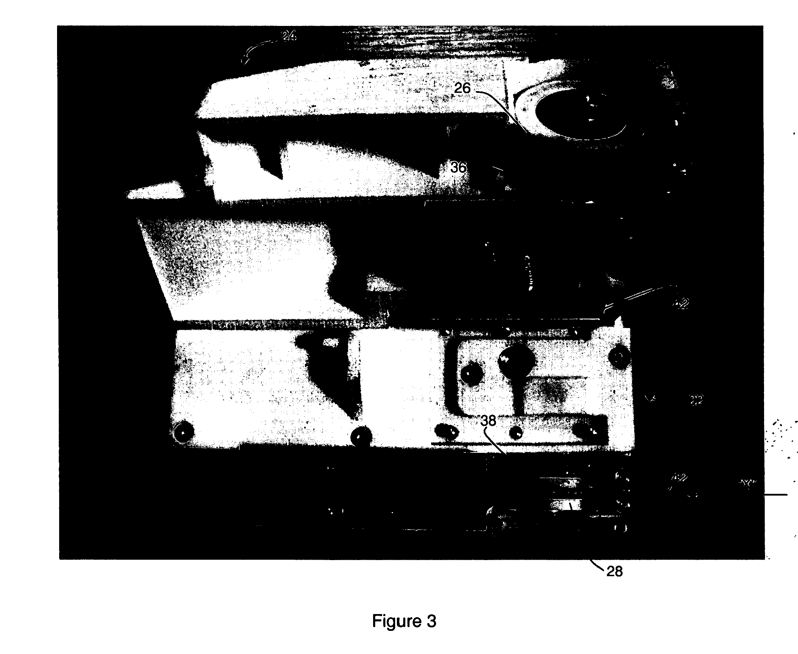

The blowing head of the invention is a development of the low-inertia blowing head of WO 2006103419. It comprises a housing (22, 24) which like the blowing head discussed against Figure 1 B, can be opened to allow a user to access the interior, as shown below in Figure 3. A bore (not clearly visible) extends the length of the blowing head, from an entry end to the exit end, along which path the fibre unit (not shown) travels during use. A section of the fibre unit path passes between the drive wheels. Upper and lower drive wheels (26, 28) for transmitting power from a motor (not shown) to drive the fibre unit along the bore and beyond the head are provided. (It would be appreciated that the terms "upper" and "lower" in this description are only used for convenience to refer to the two drive wheels disposed relative to each other so that any other arrangement e.g. side-by-side would be included in the references thereto.)

In use, the fibre unit is fed into the bore of the blowing head via the entry end in the direction of arrow "X".

In the blowing head of the invention, the upper drive wheel (26) is coupled to a biasing mechanism (30) which, activated by a spring (32), resiliently and flexibly biases the wheel towards the other drive wheel (28). In this embodiment, the use of a compact radius arm permits the rotation of the biasing means about a pivot pin (33). Thus unlike blowing heads of the prior art, the upper drive wheel is not fixed in position relative to other drive wheel, and so is "suspended". The spring is located approximately mid point between the pivot and the suspended drive wheel.

Thus when a fibre unit travels through the blowing head, the suspended drive wheel urges or bears the fibre unit against the other drive wheel. This permits the drive wheels to flexibly accommodate the fibre unit regardless of its external dimensions, as it passes through the section where the two drive wheels both bear on the driven fibre unit (27).

With the use of biasing driving wheels, the need to calculate the precise distance to put between the drive wheel rims is removed, as is the practical problems of setting the same during manufacture in what needs to be a robust device for field use. The probability of misalignment caused through use is also removed or at the least reduced. This arrangement of the invention also compensates for any irregularity in the outline of one or both drive wheel rims.

A further advantage of employing a suspended drive wheel of the invention is that a blowing head can be used with a wider variety of fibre unit and cable sizes than was previously possible. As discussed below, various ranges of fibre sizes can be accommodated with optimal results during use during an installation session, depending on the pressure or force to which the biasing arm is set.

The embodiment of the invention shown in Figures 2A and 2B shows the biasing mechanism to be based on spring-loading although the skilled person would appreciate that any other type of biasing means would be within the scope of the invention. Also, while the upper drive wheel is shown to be the suspended wheel including the biasing mechanism, the other drive wheel - or for that matter, both drive wheels - can incorporate biasing means to obtain the advantage of the invention. Thus, any arrangement wherein the drive wheels or other driving means are resiliently biased against the fibre unit or cable would fall within the scope of the invention.

Turning back to Figures 2A and 2B, the biased drive wheel (26) is shown to be arranged so that in use the fibre unit will be caused to bear against the lower motorised drive wheel (28). The skilled person would understand that it would be within the scope of the invention to provide any other surface suitable for the fibre unit to bear against. Thus the fibre unit can be caused to bear against a second drive wheel which is freely turning (i.e. not motorised to output a driving force); it need not even take the form of a wheel, but can comprise a surface against which the fibre unit can pass along in use. In the preferred embodiment however, the lower drive wheel provides additional driving power, and also improves the sensitivity of the low-inertia system by being a moveable element.

As briefly mentioned above, the suspended or biased drive wheel is capable of accommodating a variety of different sized fibre units or cables, which a range which in part depends on the biasing or compressive force set in the particular case.

The spring compressive force or pressure for the biasing means can be set at a variety of values. A high spring force will result in a stiff, unyielding suspended drive wheel, which will enhance the driving capability of the wheel and discourage fibre unit slipping. Conversely, a low spring force causes the suspended drive wheel to be highly responsive to changes in fibre unit and cable size, as well as to any irregularities in the outline of the drive wheel circumferences. The compressive force level can be selected depending on the user's priorities and requirements, it can also be, as discussed below, adjusted as needed.

In an embodiment for installing a fibre unit cable having an external diameter dimension of 1 mm, the compressive force applied via the sprung loaded biasing arm can be set at about 6.7 N with a spring rate of about 30 g/mm. The applicants have determined that this value works with. The helical spring (32) used for the biasing in this embodiment is preferably relatively "lightweight", e.g. manufactured from 0.53 mm gauge spring steel of about 20 mm length, so that a small adjustment can be made to the drive wheel compressive force by e.g. a small screw that is directly is contacted with the spring. The compressive force of the biasing means can be set using a separate or detachable spring balance, and adjusting the screw to compensate for any variations in the drive wheel compressive force, and thus to accommodate a different sized fibre cable or unit. Based on the most-commonly used blown fibre unit sizes of 1 mm and 1.5 mm however, the spring force rate differential between them is likely to be sufficiently insignificant so as not to require any adjustment of the biasing spring, nor in the level of capped motor current. There could however, be situations when the extent of change would require an adjustment of the spring force setting and/or the capped current levels.

The skilled person would appreciate that various alternatives to a helical spring are available e.g. a leaf spring, which would be within the scope of the invention. However, a helical spring is both compact and easily adjustable, so is a preferred method.

Figure 3 depicts yet another view of an embodiment of a blowing head (20) of the invention. Here, the two sections of the housing (22, 24) are open to show the interior. The upper drive wheel (26) is shown to be coupled to an upper gear wheel (36). When the two housing sections are closed together and secured by a screw (42), the teeth of the upper gear wheel engage with those of a lower gear wheel (38) which is coupled to the lower gear wheel (28). In the embodiment of the invention shown, a motor (not visible) is coupled to the lower drive wheel (28) so that in use, the driving force of the motor drives the two drive wheels (26 and 28) indirectly via the respective gear wheels (36 and 38). The particular arrangement of the gearing contributes to increasing the sensitivity and responsiveness of the system to fibre unit movement during use. Again, the biasing mechanism (30) is shown to be coupled to the upper wheel, this is because there room in this area as the lower wheel is coupled to the motor. The skilled person would however realise that that any number of alternative arrangements within the scope of the invention are available, as regards the number of biasing mechanisms and their exact positions.

Also depicted in this drawing are some other essential elements of the blowing head, including an air chamber portion (40) which includes a bore extending along its length. In use, an optical fibre enters the blowing head at the entrance end (42), proceeds along the bore, is driven along by and between the drive wheels and into the bore of the air chamber. The air chamber is so called as pressurised air is fed into its bore via a vent (14 in Figure 1 but not shown in Figure 3). The fibre unit eventually emerges from the other end of the air chamber and into a fibre tube (not shown).

The configurations as described above and in the drawings are for ease of description only and not meant to restrict the apparatus or methods to a particular arrangement or process in use. It will be apparent to the skilled person that various sequences and permutations on the methods and apparatus described are possible within the scope of this invention as disclosed.

## Claims

1. A blowing head for installing an optical fibre unit into a tube, including driving means for driving the optical fibre unit into the tube, the driving means having a plurality of driving surfaces, wherein one or more of the plurality of the driving surfaces are resiliently biased with a predetermined force toward the other driving surface or surfaces, and wherein in use the optical fibre unit moves between the plurality of driving surfaces.

2. A blowing head according to claim 1 wherein the driving means includes a first driving surface and a second driving surface, the first driving surface being a surface of a rim of a first drive wheel which in use is coupled to a power source to rotatably drive the optical fibre unit into the tube via the blowing head.

3. A blowing head according to claim 2 wherein the second driving surface comprises a surface of a rim of a second drive wheel.

4. A blowing head according to claim 3 wherein the second drive wheel is in use coupled to a power source to rotatably drive the optical fibre unit into the tube via the blowing head.

5. A blowing head according to any one of claims 2 to 4 further including biasing means to bias the first driving surface against the second driving surface, and wherein the biasing means is spring-loaded.

6. A blowing head according to claim 5 wherein the biasing means is a helical spring.

7. A blowing head according to any preceding claim wherein the driving means is arranged in use to be responsive to any change in movement of the optical fibre unit.

8. A blowing head according to claim 7 wherein the driving means is in use powered to an electric motor capable of outputting an electric current which is capped.

9. A blowing head according to any preceding claim further including means to direct a source of pressurised air into the tube via the blowing head.

10. An installation including a blowing head for installing an optical fibre unit into a tube, including driving means for driving the optical fibre unit into the tube via the blowing head, the driving means having a plurality of driving surfaces, wherein one or more of the plurality of the driving surfaces are resiliently biased with a predetermined force toward the other driving surface or surfaces, and wherein in use the optical fibre unit moves between the plurality of driving surfaces.

11. A method of installing an optical fibre unit into a tube, including the steps of
- inserting the optical fibre unit into the blowing head,
- driving the optical fibre unit through the blowing head between a plurality of driving surfaces, wherein one or more of the plurality of the driving surfaces are arranged to resiliently bias with a predetermined force toward the other driving surface or surfaces, and
- driving the optical fibre unit out of the blowing head and into a tube connected to the blowing head using the driving means.

12. An optical fibre unit installed into a tube whenever obtained by carrying out a method including the steps of
- inserting the optical fibre unit into the blowing head,
- driving the optical fibre unit through the blowing head between a plurality of driving surfaces, wherein one or more of the plurality of the driving surfaces are arranged to resiliently bias with a predetermined force toward the other driving surface or surfaces, and
- driving the optical fibre unit out of the blowing head and into a tube connected to the blowing head using the driving means.
